# DEMANDE DE BREVET EUROPEEN

(11) **EP 3 098 160 A1**
(43) Date de publication de la demande: **30.11.2016**
(21) Numéro de dépôt: 16170302.0
(22) Date de dépôt: 19.05.2016
(51) Int. Cl.: B64C 1/08

(54) **RAIDISSEUR MONOBLOC POUR STRUCTURE AERONAUTIQUE**

(30) Priorité: 29.05.2015 FR 1554842
(71) Demandeur: Stelia Aerospace, 17300 Rochefort (FR)
(72) Inventeur: KAWSKI, Nicolas, 31140 SAINT LOUP CAMMAS (FR); VINCENT, Olivier, 31700 CORNEBARRIEU (FR)
(74) Mandataire: Argyma

(57) **Abrégé**

Un raidisseur monobloc pour structure aéronautique, le raidisseur comprenant un corps monobloc (30) comportant au moins une portion longitudinale (31) qui est creuse de manière à définir une enveloppe extérieure, ladite enveloppe extérieure comportant une pluralité d'ouvertures (5).

## Description

### DOMAINE TECHNIQUE GENERAL ET ART ANTERIEUR

La présente invention concerne la fabrication de structures aéronautiques, en particulier, une partie d'un fuselage d'un aéronef. De manière préférée, une structure aéronautique comporte un panneau extérieur et des raidisseurs afin d'augmenter la rigidité dudit panneau.

La résistance mécanique d'une telle structure doit être élevée afin de reprendre les différents efforts qui transitent dans un aéronef au cours de son utilisation. Par ailleurs, la masse d'une telle structure doit être la plus faible possible afin de limiter la masse de l'aéronef sur lequel la structure doit être montée.

A titre d'exemple, on connaît par la demande de brevet US2170458A un panneau sur lequel sont fixés une pluralité de raidisseurs afin d'augmenter sa rigidité. Chaque raidisseur comporte trois longerons longitudinaux qui sont reliés par des liens élémentaires de manière à former entre deux longerons une liaison ayant une forme sensiblement sinusoïdale. Chaque extrémité d'un lien élémentaire est fixée à un longeron. Afin de diminuer la masse du raidisseur, il est enseigné de réaliser des ouvertures dans lesdits liens élémentaires.

Un tel raidisseur selon l'art antérieur est complexe à réaliser étant donné qu'il est nécessaire de solidariser chacun des liens élémentaires à un des longerons. Cela présente de nombreux inconvénients compte tenu du nombre de liens élémentaires. En outre, la liaison de chaque lien élémentaire est susceptible de former un point de faiblesse du raidisseur, ce qui présente un autre inconvénient. De plus, de telles liaisons pénalisent la masse globale du raidisseur.

Un des objectifs de la présente demande de brevet est de proposer un raidisseur dont la masse et la résistance sont optimales pour former une structure aéronautique ayant une grande rigidité tout en ayant une masse faible.

### PRESENTATION GENERALE DE L'INVENTION

A cet effet, l'invention concerne un raidisseur monobloc pour structure aéronautique, le raidisseur comprenant un corps monobloc comportant au moins une portion longitudinale qui est creuse de manière à définir une enveloppe extérieure, ladite enveloppe extérieure comportant une pluralité d'ouvertures.

Le raidisseur selon l'invention possède une structure légère du fait de la présence d'ouvertures. En outre, étant donné qu'il est monobloc, il n'existe avantageusement pas de points de faiblesse liés à l'assemblage de plusieurs pièces comme cela est le cas dans l'art antérieur. Les efforts sont repris de manière optimale, ce qui est avantageux. En outre, des câbles électriques ou hydrauliques peuvent être placés de manière pratique dans la portion longitudinale creuse du raidisseur, ce qui augmente la compacité de la structure aéronautique. De plus, grâce aux ouvertures, le passage d'outils est facilité pour l'assemblage du raidisseur à un panneau.

De préférence, le raidisseur possède une résistance à la traction inférieure à 70kN de manière à pouvoir être utilisé dans une structure aéronautique.

De préférence encore, le raidisseur possède une résistance à la flexion inférieure à 40kN.M de manière à pouvoir être utilisé dans une structure aéronautique.

De préférence encore, le corps longitudinal comporte une section comprise entre 50mm² et 500mm² de manière à pouvoir être intégré à une structure aéronautique.

De préférence, l'enveloppe extérieure possède au moins deux faces planes comportant une pluralité d'ouvertures. Ainsi, la masse du raidisseur est réduite de manière importante. De préférence encore, lesdites faces latérales sont en vis-à-vis de manière à former un raidisseur dont la rigidité est symétrique lorsque ce dernier est monté sur une structure aéronautique. De manière préférée, les faces latérales en vis-à-vis possèdent des ouvertures qui sont décalées longitudinalement de manière à améliorer la stabilité du raidisseur.

Selon un aspect, l'enveloppe extérieure possède une section transversale de forme polygonale de manière à définir une pluralité de faces planes. De telles faces planes permettent de faciliter le montage du raidisseur sur un panneau pour former une structure aéronautique.

De manière avantageuse, lesdites ouvertures forment un pavage de manière à ce que la surface du pavage possède une résistance mécanique sensiblement homogène.

De préférence, ledit pavage possède un taux d'ouverture supérieur à 20% de manière à assurer un compromis entre une résistance mécanique élevée et une masse réduite.

De manière avantageuse, le corps comprend une pluralité de portions longitudinales et au moins une portion de jonction reliant lesdites portions longitudinales afin de former une surface importante pour rigidifier, par exemple, un panneau.

Selon un aspect préféré, le raidisseur est entièrement creux. Autrement dit, la ou les portions longitudinales et la ou les portions de jonction sont creuses pour diminuer la masse du raidisseur.

De manière préférée, le raidisseur est obtenu par ajout successif de couches de matériaux, de préférence, par une méthode dite de fabrication additive ou d'impression tridimensionnelle ("Additive Layer Manufacturing").

Selon un aspect préféré, le raidisseur est en matériau métallique, de préférence, en aluminium.

L'invention concerne également un module de raidissement pour structure aéronautique comportant une pluralité de raidisseurs monoblocs tels que présentés précédemment. Un tel module de raidissement possède une surface importante afin de pouvoir rigidifier, par exemple, un panneau.

De manière préférée, lesdits raidisseurs monoblocs sont reliés ensemble par des moyens de liaison, de préférence, par des éclisses.

L'invention concerne également une structure aéronautique comprenant un panneau sur lequel est fixé au moins un module de raidissement tel que présenté précédemment.

De manière préférée, la structure aéronautique est une partie d'un fuselage d'avion.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'une structure aéronautique selon une forme de réalisation de l'invention ;
- la figure 2 est une représentation schématique d'un raidisseur ;
- la figure 3 est une représentation schématique en perspective d'une extrémité d'un raidisseur ;
- la figure 4 est une représentation schématique d'une portion longitudinale d'un raidisseur ;
- la figure 5 est une représentation schématique d'une liaison de deux raidisseurs adjacents ; et
- la figure 6 est une représentation schématique d'une tôle métallique pour la réalisation d'un raidisseur.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES REALISATION ET MISE EN OEUVRE

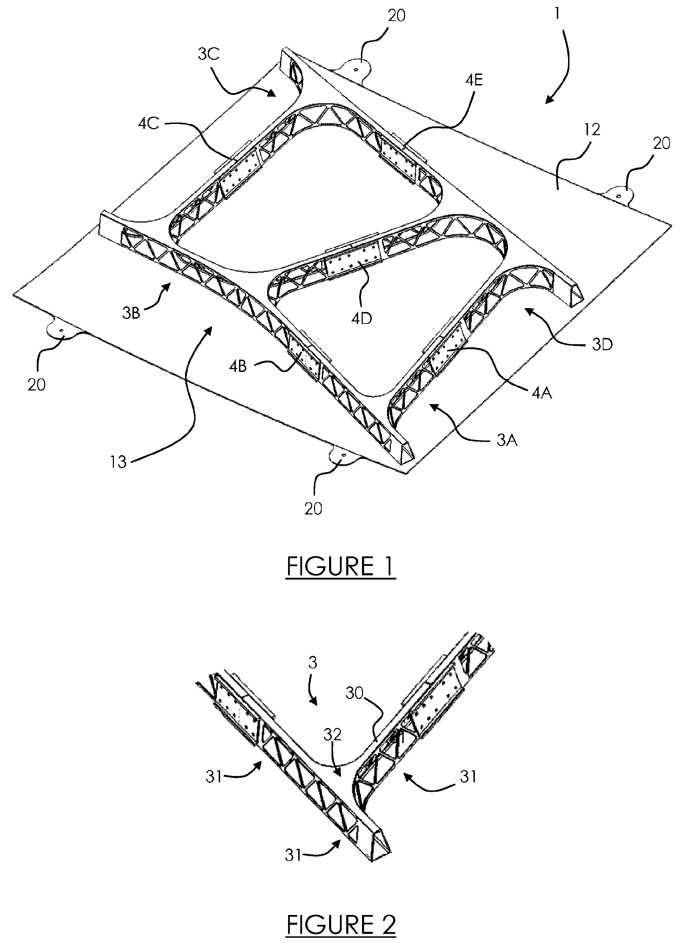

En référence à la figure 1, il est représenté une structure aéronautique selon une forme de réalisation de l'invention. Dans cet exemple, la structure aéronautique 1 est une partie de fuselage d'un avion et comporte un panneau 12 sur lequel est fixé un module de raidissement 13 aux moyens de rivets. Néanmoins, il va de soi que d'autres moyens de fixation pourraient convenir, par exemple, une fixation par boulonnage ou une fixation par soudage ou collage.

Le panneau 12 est de préférence réalisé en un matériau métallique afin de bénéficier d'une résistance mécanique importante. Néanmoins, il va de soi qu'un panneau composite pourrait également convenir afin de bénéficier d'un poids réduit. De manière préférée, le panneau 12 comporte des organes de liaison 20 afin de permettre de relier plusieurs structures 1 ensemble pour former un fuselage d'aéronef.

Toujours en référence à la figure 1, le module de raidissement 13 comporte une pluralité de raidisseurs monoblocs 3A-3D qui sont reliés entre eux par des moyens de liaison 4A-4E de manière à ce que le module de raidissement 13 possède une surface importante permettant de rigidifier le panneau 12. Dans cet exemple, le module de raidissement 13 comporte quatre raidisseurs monoblocs 3A-3D mais il va de soi que leur nombre pourrait être différent. De même, le module de raidissement 13 comporte cinq moyens de liaison 4A-4E mais il va de soi que leur nombre pourrait être différent en fonction de la forme et du nombre des raidisseurs 3A-3D. Les moyens de liaison 4A-4E seront présentés plus en détails par la suite.

Il va être dorénavant présenté le raidisseur monobloc 3A du module de raidissement 13. Par souci de clarté et de concision, le raidisseur monobloc est désigné avec la référence numérique « 3 » à la figure 2. Le raidisseur 3 est qualifié de monobloc car il est réalisé d'une seule pièce et n'est pas formé d'un assemblage de pièces comme cela peut être le cas pour le raidisseur de la demande de brevet US2170458A.

Comme illustré à la figure 2, le raidisseur monobloc 3 comporte un corps 30 comprenant trois portions longitudinales 31 reliées par une portion de jonction 32. Il va de soi qu'un raidisseur monobloc 3 pourrait comporter un nombre différent de portions longitudinales 31 et de portions de jonction 32. A titre d'exemple, en référence à la figure 1, le raidisseur monobloc 3B comporte cinq portions longitudinales 31 et deux portions de jonction 32.

De préférence, le raidisseur monobloc 23 possède une résistance à la traction inférieure à 70kN, une résistance à la flexion inférieure à 40kN.M et une section comprise entre 50mm² et 500mm² de manière à pouvoir être intégré à une structure aéronautique.

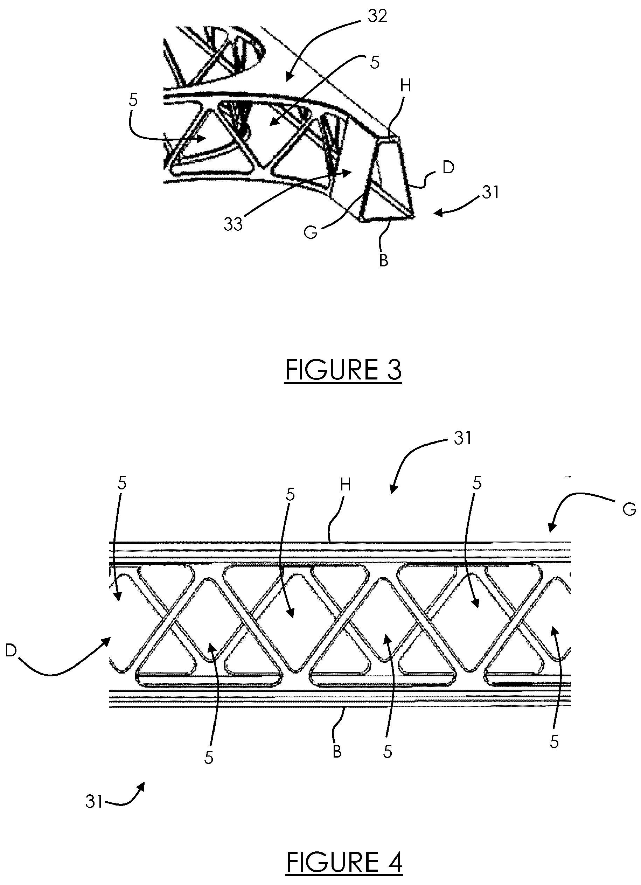

Une portion longitudinale 31 est représentée de manière schématique en référence à la figure 4. La portion longitudinale 31 est creuse et possède une enveloppe périphérique dont la section est polygonale. Dans cet exemple, la section de l'enveloppe est trapézoïdale mais il va de soi qu'elle pourrait être différente, en particulier, carrée, pentagonale ou hexagonale. Il va de soi que la section pourrait ne pas être polygonale et comporter une ou plusieurs parties courbes. Néanmoins, il est préféré que la section comporte au moins une face plane, en particulier, pour être fixée au panneau 12 de la structure 1. De même, les arêtes entre les faces peuvent être saillantes ou arrondies.

En référence à la figure 3, l'enveloppe de la portion longitudinale 31 définit quatre faces latérales : une face inférieure B, une face supérieure H et deux faces latérales G, D. De manière préférée, les faces sont sensiblement planes. Dans cet exemple, la face inférieure B est destinée à être fixée à un panneau 12 comme illustré à la figure 1.

Selon l'invention, l'enveloppe de la portion longitudinale 31 comporte une pluralité d'ouvertures 5 afin de réduire la masse du raidisseur monobloc 3 tout en permettant qu'il conserve une rigidité importante au niveau de ses zones les plus sollicitées mécaniquement.

Dans cet exemple, en référence à la figure 4, la portion longitudinale 31 comporte une pluralité d'ouvertures 5 définissant un même motif, en particulier, un motif triangulaire. De manière préférée, les ouvertures 5 de l'enveloppe sont positionnées les unes à côté des autres pour former un pavage de manière à conférer à la zone couverte par le pavage une résistance mécanique homogène. Il a été présenté un pavage comportant un même motif mais il va de soi que le pavage pourrait comprendre plusieurs motifs différents. Tout motif polygonal pourrait avantageusement convenir.

De manière préférée, le taux d'ouverture du pavage, c'est-à-dire le rapport de la surface d'ouverture sur la surface totale du pavage, est compris entre 10% et 99,5%, de préférence encore, entre 20% et 99,5% de manière à assurer un compromis entre résistance et légèreté.

Toujours en référence à la figure 4, les faces latérales G, D comportent des ouvertures 5 tandis que la face supérieure H et la face inférieure B demeurent pleines. Cela permet, d'une part, à la face inférieure B de pouvoir être aisément reliée à un panneau 2, par exemple par rivetage, et, d'autre part, à la face supérieure H de pouvoir être aisément reliée à un élément d'habillage de l'aéronef (panneau de couverture, etc.).

De manière préférée, les faces latérales G, D en vis-à-vis possèdent des ouvertures 5 qui sont décalées. Autrement dit, les ouvertures 5 d'une face latérale G ne sont pas alignées longitudinalement avec les ouvertures 5 de la face latérale D en vis-à-vis de manière à augmenter la rigidité mécanique.

De manière préférée, toutes les portions longitudinales 31 d'un raidisseur monobloc 3 sont creuses. De préférence encore, les portions de jonction 32 sont également creuses de manière à former un raidisseur monobloc 3 entièrement creux dont la masse est réduite. En référence à la figure 3, de manière similaire à une portion longitudinale 31, une portion de jonction 32 comporte des faces latérales comportant des ouvertures 5 et, de préférence, une face supérieure et une face inférieure qui demeurent pleines. Les faces latérales d'une portion de jonction 32 sont généralement incurvées de manière à relier ensemble des faces latérales D, G de portions longitudinales 31 s'étendant selon des directions différentes comme illustré à la figure 1. De préférence encore, les faces latérales d'une portion de jonction 32 comportent également un pavage d'ouvertures 5.

De manière préférée, chaque raidisseur monobloc 3 est réalisé par un procédé d'impression 3D, de préférence, par une méthode d'ajout successif de couches de matière plus connu de l'homme du métier sous sa désignation anglaise "Additive Layer Manufacturing". Selon un tel procédé, des couches de poudre métallique sont déposées successivement, chaque couche étant fusionnée à la couche précédente, par exemple, par un faisceau laser ou un faisceau d'électrons.

De manière préférée, le raidisseur monobloc 3 est réalisé en aluminium, en acier ou en inox. Un tel procédé de fabrication offre une grande liberté de conception et permet d'obtenir des formes variées et complexes.

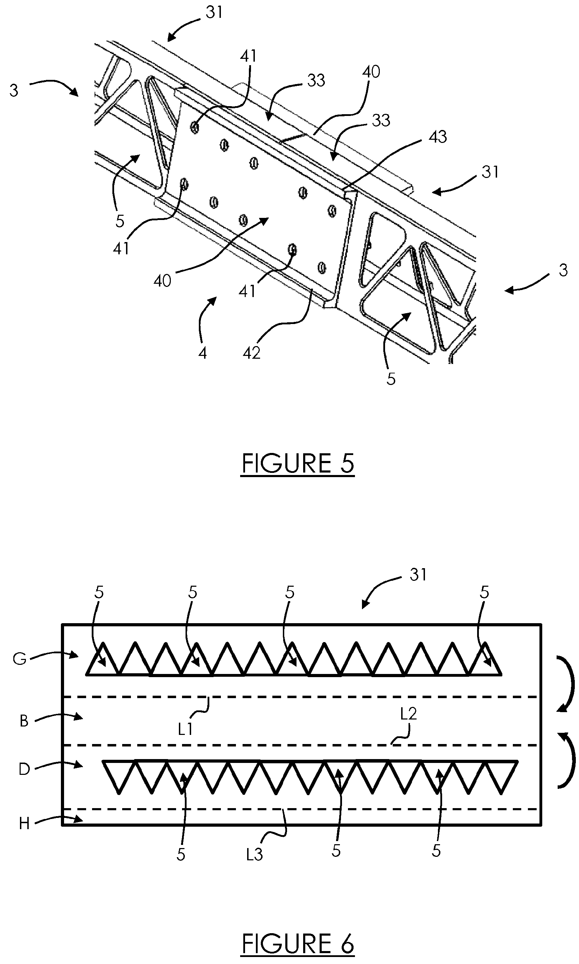

De manière alternative, chaque raidisseur monobloc 3 est réalisé par un procédé de pliage d'une tôle métallique, de préférence, en aluminium ou en acier. En référence à la figure 6, une tôle métallique plane est usinée de manière à former une pluralité d'ouvertures 5 dans les faces latérales D, G de la portion longitudinale 31 du raidisseur 3. Ensuite, la tôle métallique est pliée selon plusieurs lignes de pliages L1-L3 afin de mettre en forme le raidisseur 3. Les bords libres de la tôle métallique sont ensuite fixés ensemble pour former une enveloppe périphérique. La liaison est de préférence réalisée par soudage mais il va de soi que d'autres méthodes pourraient convenir. Un tel procédé de fabrication permet d'obtenir des raidisseurs 3 de grandes dimensions pour un coût limité.

Il va dorénavant être présenté les moyens de liaison 4A. Par souci de clarté et de concision, les moyens de liaison 4A sont désignés avec la référence numérique 4 à la figure 5.

Comme illustré aux figures 1 et 5, deux raidisseurs adjacents 3 sont reliés ensemble par des moyens de liaison 4. De manière plus précise, les moyens de liaison 4 permettent de connecter deux extrémités libres 33 d'une portion longitudinale 31 d'un raidisseur 3. A cet effet, chaque extrémité libre 33 d'une portion longitudinale 31 d'un raidisseur 3 comporte une enveloppe dont les faces latérales G, D sont pleines comme illustré à la figure 3 de manière à permettre la fixation des moyens de liaison 4.

Dans cet exemple, en référence à la figure 5, les moyens de liaison 4 se présentent sous la forme de deux plaques 40, appelées également éclisses, montées en vis-à-vis sur les faces latérales pleines G, D des extrémités libres 33 des portions longitudinales 31 des raidisseurs 3. Chaque plaque 40 possède une forme rectangulaire et comporte deux bords longitudinaux épaissis 42, 43 de manière à augmenter sa résistance mécanique. Chaque plaque 40 comporte par ailleurs une pluralité d'orifices 41 destinés à permettre le passage d'organes de fixation (vis, rivets, etc.) à travers la plaque 40 pour atteindre une des faces latérales pleines G, D des raidisseurs 3. Autrement dit, chaque plaque 40 permet de solidariser deux faces latérales G, D alignées ensemble comme représenté à la figure 5.

Il va de soi que d'autres moyens de liaison 4 pourraient convenir, par exemple, une liaison par recouvrement, une liaison par collage ou par soudage. Il va de soi qu'un module de raidissement pourrait être réalisé sous la forme d'un raidisseur monobloc si ses dimensions ne sont pas trop importantes.

Pour former le module de raidissement 13 de la figure 1, il suffit de fabriquer de manière individuelle chaque raidisseur 3 comme présenté précédemment et de les relier ensemble aux moyens des plaques 40. Le module de raidissement 13 se présente alors sous la forme d'un cadre dont la surface est importante et dont la masse est réduite. De manière préférée, le module de raidissement 13 peut être plan ou incurvé en fonction des besoins. Dans ce cas, une ou plusieurs portions de jonction 32 et/ou une ou plusieurs portions longitudinales 31 sont incurvées.

Pour former une structure aéronautique 1, en particulier une partie de fuselage d'un aéronef, les faces inférieures pleines B du module de raidissement 13 sont placées contre le panneau 12 puis sont fixées audit panneau 12, en particulier, au moyen de rivets.

La partie de fuselage obtenue possède une résistance mécanique optimale pour une masse réduite, ce qui permet d'obtenir un aéronef dont la consommation de carburant est limitée. De plus, des câbles électriques ou hydrauliques peuvent être placés de manière pratique dans la portion longitudinale creuse 31 des raidisseurs 3, ce qui augmente la compacité de la partie de fuselage. En outre, grâce aux ouvertures, le passage d'outils est facilité pour l'assemblage du module de raidissement 13 à un panneau 12.

Enfin, le procédé de fabrication de chaque raidisseur 3 et la méthode d'assemblage d'une structure aéronautique 1 sont rapides à mettre en oeuvre et offrent une grande fiabilité, ce qui est avantageux.

## Revendications

1. Raidisseur monobloc (3) pour structure aéronautique (1), le raidisseur (3) comprenant un corps monobloc (30) comportant au moins une portion longitudinale (31) qui est creuse de manière à définir une enveloppe extérieure, ladite enveloppe extérieure comportant une pluralité d'ouvertures (5).

2. Raidisseur (3) selon la revendication 1, dans lequel l'enveloppe extérieure possède au moins deux faces planes comportant une pluralité d'ouvertures (5).

3. Raidisseur (3) selon l'une des revendications 1 à 2, dans lequel l'enveloppe extérieure possède une section transversale de forme polygonale de manière à définir une pluralité de faces planes.

4. Raidisseur (3) selon l'une des revendications 1 à 3, dans lequel lesdites ouvertures (5) forment un pavage.

5. Raidisseur (3) selon la revendication 4, dans lequel ledit pavage possède un taux d'ouverture supérieur à 20%.

6. Raidisseur (3) selon l'une des revendications précédentes, dans lequel, le corps (30) comprend une pluralité de portions longitudinales (31) et au moins une portion de jonction (32) reliant lesdites portions longitudinales (31).

7. Raidisseur (3) selon l'une des revendications précédentes, **caractérisé en ce qu'**il est obtenu par ajout successif de couches de matériaux.

8. Raidisseur (3) selon l'une des revendications précédentes, **caractérisé en ce qu'**il est en matériau métallique, de préférence, en aluminium.

9. Module de raidissement (13) pour structure aéronautique (1) comportant une pluralité de raidisseurs monoblocs (3) selon l'une des revendications précédentes.

10. Structure aéronautique (1) comprenant un panneau (12) sur lequel est fixé au moins un module de raidissement (13) selon la revendication précédente.
